# EUROPEAN PATENT APPLICATION

(11) **EP 2 059 000 A1**
(43) Date of publication of application: **13.05.2009**
(21) Application number: 07291328.8
(22) Date of filing: 06.11.2007
(51) Int. Cl.: H04L 29/06

(54) **Method and apparatus for establishing a voice bearer in a telecommunications system**

(71) Applicant: Alcatel Lucent, 75008 Paris (FR)
(72) Inventor: Dupuy, Pierre, 75017 Paris (FR); Landais, Bruno, 22560 Pleumeur-Bodou (FR)
(74) Representative: Cockayne, Gillian

(57) **Abstract**

A method for establishing a voice bearer in a telecommunications system in which packetized voice traffic is carried over a user plane, includes negotiating at least one of header compression and voice multiplexing options for a call (13) and, in the negotiation process, using information about the options that is not sent over the user plane during transmission of voice traffic over the user plane. The information may be sent by signaling out of band and not via the user plane, thus not impacting on transmission of voices data. In another method, option information from a previous call or calls between the same IP addresses (15) is used to set up the options for a new call without any additional signaling (16).

## Description

### FIELD OF THE INVENTION

The present invention relates to a method and apparatus for establishing a voice bearer in a telecommunications system and more particularly, but not exclusively, in a telecommunication system in which voice traffic is transmitted via voice over IP on the A-interface ("AoIP").

### BACKGROUND OF THE INVENTION

The 3rd Generation Partnership Project ("3GPP"): Technical Specification Group GERAN, Release 8, is to introduce the transport of voice over IP on the A-interface. The A-interface is the user plane between a Base Station System ("BSS") and a Media Gateway ("MGW"). It has been proposed that AoIP should use a protocol that is very similar to that of the Nb interface as defined in 3GPP specification TS 29.414 v7.2.0 (2007-03), incorporated herein by way of reference. The Nb interface is the interface used to transfer data, such as voice packets, between MGWs. From a user viewpoint, the AoIP interface between the BSS and the MGW will be almost Nb, that is, the BSS will behave as an MGW. Protocols for transmitting voice packets include Real time Transport Protocol ("RTP"), User Datagram Protocol ("UDP") and Internet Protocol ("IP"), together with Real Time Transport Control Protocol ("RTCP") for control purposes.

The proposed AoIP protocol provides bandwidth efficiency due to two optional features that may be used, depending on the capabilities of the endpoints of a call and whether or not they support the features in a compatible manner. The first feature is voice multiplexing, in which several voice channels are combined in a single IP packet. The second feature is RTP header compression, in which only changing parts of the RTP headers are transmitted, thus giving a reduction in the RTP header size. It is necessary to determine what features an endpoint is capable of supporting and their implementation. This is established by negotiation using RTCP signalling between endpoints to ensure appropriate selection of the features. Firstly, the two endpoints are configured via external signalling. Then the two endpoints start transmitting the speech information, using the RTP/UDP/IP protocol, without multiplexing or RTP header compression. The end-points send an RTCP command to negotiate multiplexing and RTP header compression. After a successful negotiation, and assuming that at least one of the options is feasible, the end points are able to multiplex the voice packets with other packets sent to the same IP address and/or implement RCP header compression. In summary, when a new call is set up, the entities start sending data in uncompressed, non-multiplexing mode, until RTCP has negotiated these two options. It is only after the completion of this message exchange that the options can be used.

Sub-clause 6.4 of 3GPP specification TS 29.414 sets out optional transport formats for the Nb interface and IP transport that allows transporting several RTP/NbFP/codec payload PDUs of different user plane connections within one packet, and the corresponding backward compatible signaling extensions required to negotiate the use of this transport option. Two transport formats are specified for multiplexing several NbFP PDUs within one UDP/IP packet and for RTP header compression. It is proposed that these formats also be available for AoIP.

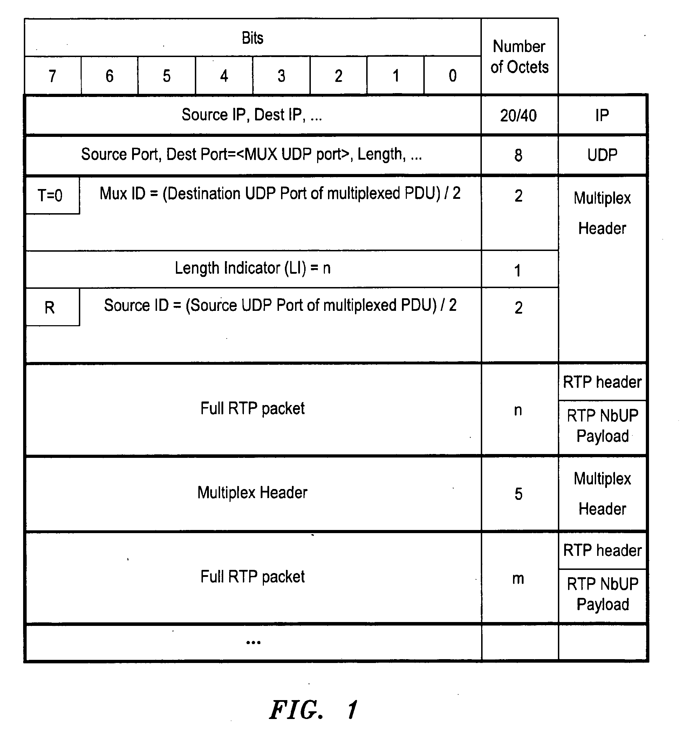

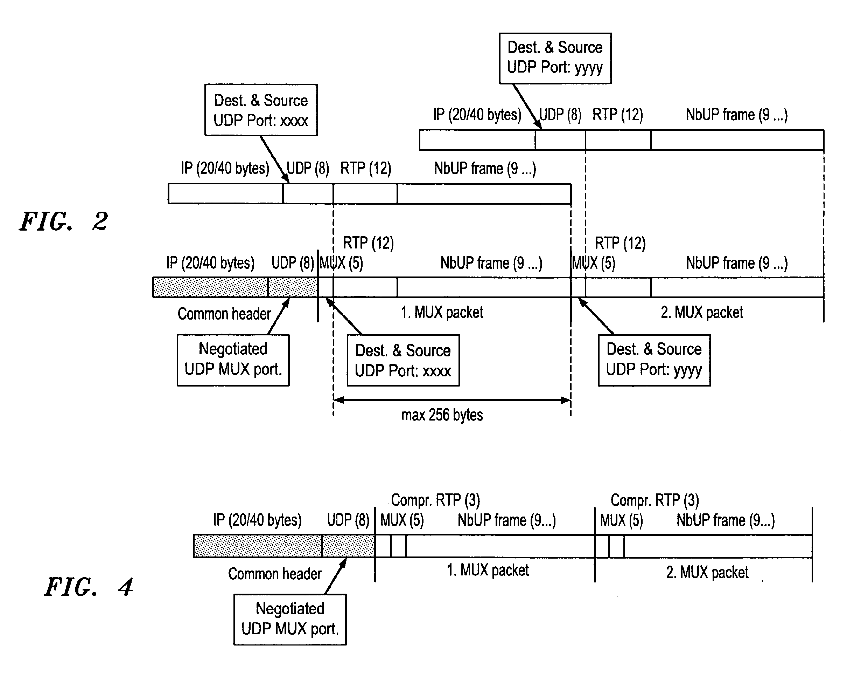

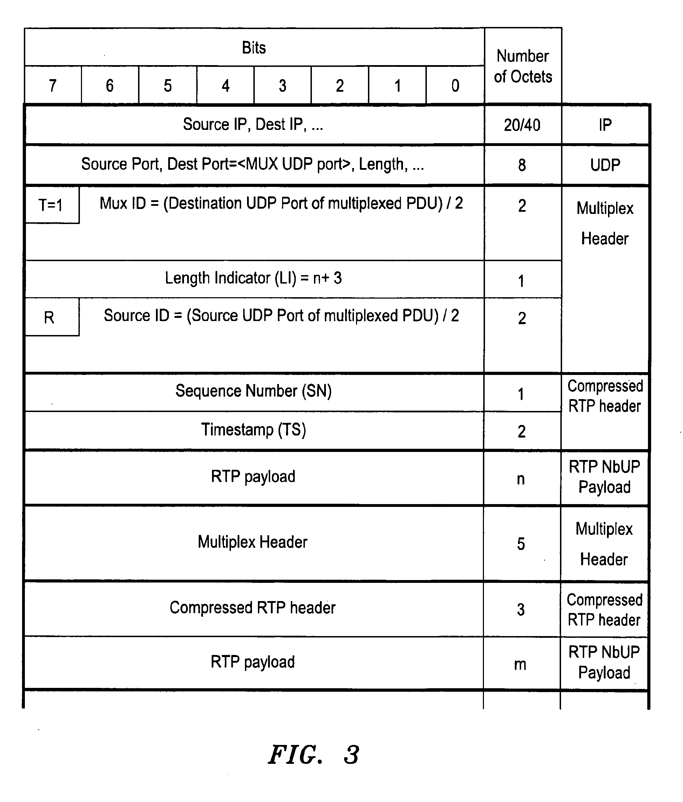

Figure 1 schematically illustrates an implementation of multiplexed voice data for the Nb interface, in which a UDP/IP Packet includes multiplexed RTP/NbUP payload PDUs but there is no RTP header compression, where NbUP is the Nb user plane interface and PDUs are Protocol Data Units. The multiplexing method does not limit the number of packets being multiplexed. Figure 2 illustrates a multiplexed packet with two RTP frames. Compression of the RTP header is possible as it includes static fields that remain unchanged during a session. Only information about fields that do change needs to be transmitted. Figure 3 shows a UDP/IP Packet with multiplexed RTP/NbFP payload PDUs which also includes RTP header compression. Figure 4 illustrates a multiplexed packet with two RTP frames and compressed RTP headers.

When a new call is set up, and before multiplexing and/or header compression options are negotiated, significantly more bandwidth is required than after negotiation has been completed. For example, typically before the negotiation, the overhead (IP, UDP, RTP) is of 40 to 60 bytes. After negotiation, assuming that 20 voice packets are multiplexed, the overhead is:
28 to 48/20 = 1.4 to 2.4 bytes for UDP/IP
5+3=8 bytes for multiplexing and UDP

Assuming a payload of 40 bytes, the bandwidth required after negotiation is about 50 bytes, compared to 80 to 100 bytes before negotiation. Before negotiation, the cost of voice channel is equivalent to two voice channels after negotiation. When the link load is very low, this is not an issue. However, at high load, this can exceed the available bandwidth on the links, provoking packet loss. Thus, the Quality of Service, QoS, is reduced and this may result in audible effects, compromising the call.

### BRIEF SUMMARY OF THE INVENTION

According to a first aspect of the invention, a method of establishing a voice bearer in a telecommunications system in which packetized voice traffic is carried over a user plane includes the step of: negotiating at least one of header compression and voice multiplexing options for a call, and, in the negotiation process, using information about the options that is not sent over the user plane during transmission of voice traffic over the user plane. By defining the header compression and/or voice multiplexing options in the call set up sequence without using the same channel as current voice traffic, this avoids using excessive bandwidth on the user plane. The negotiation concerning the options can be carried out without impacting on the voice transmission quality. The invention is particularly applicable to use in a telecommunications system in accordance with 3GPP A-interface over IP, AoIP, specifications, but it may also be applicable to other arrangements based on other specifications. For example, the user plane may be the Nb user plane interface. AoIP and NbIP may be designated to use the same interface. The user plane may be the A-interface between a BSS, and an MGW.

In one method in accordance with the invention, information about the options is transmitted via a separate path than that for voice traffic over the user plane. Such out of band signaling can be carried out before call data is transferred over the user plane, but it may alternatively, or in addition, be carried out simultaneously with transfer of call data, as it does not consume resources on the user plane interface. In one method in accordance with the invention, the information is transmitted between a BSS and an MGW using enhanced BSSMAP Assignment Request signaling.

In a method in accordance with the invention the information is included in a container element that also includes transport address information. This may be, for example, the AoIP Container IE, introduced in Release 8 of the 3GPP: Technical Specification Group GERAN.

In another method in accordance with the invention, the information is obtained by looking at data from a call or calls previously set up between the same IP addresses. Thus, where a call between two endpoints uses a particular set up, previously negotiated between the endpoints, then it is assumed that another call between those two endpoints is also able to support the same conditions, and these are applied without any additional signaling between the endpoints. The options for the initial call, or calls, must be negotiated. However, thereafter, negotiation of options to select multiplexing and/or header compression is not required and thus no bandwidth need be used to enable implement the options. Initial options negotiation may be done by using out of band signaling, in accordance with an aspect of the invention, or in the manner set out in the background of this specification, for example. With this latter approach, signaling over the user plane during voice traffic is used during the initial call, but only when there are no more than a couple of calls on-going, that is, at a time where there is minimal risk of link overload.

According to another aspect of the invention, a telecommunications system operates in accordance with a method in accordance with first aspect the invention.

### BRIEF DESCRIPTION OF THE DRAWINGS

Some methods and embodiments in accordance with the present invention are now described, by way of example only, and with reference to the accompanying drawings, in which:
Figure 1 schematically illustrates a multiplexed packet;
Figure 2 schematically illustrates a multiplexed packet with two RTP frames;
Figure 3 schematically illustrates a multiplexed packet with RTP header compression;
Figure 4 schematically illustrates a multiplexed packet with two RTP frames and compressed RTP frames;
Figure 5 schematically illustrates a method in accordance with the invention;
Figure 6 schematically illustrates messaging related to the method of Figure 5; and
Figure 7 schematically illustrates another method in accordance with the invention.

### DETAILED DESCRIPTION

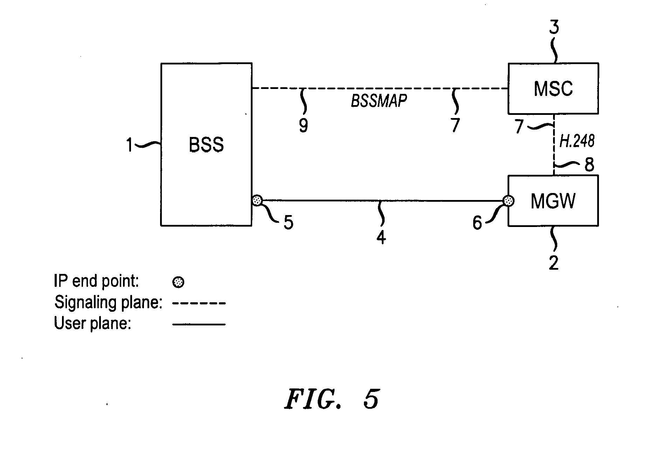

With reference to Figure 5, a telecommunications system includes a BSS 1, connected to an MGW 2 and a Mobile Switching Center ("MSC") 3, which communicates with the BSS 1 and MGW 2. Voice traffic is transmitted across the A-interface user plane 4, with the IP end points being shown at 5 and 6. The signaling plane 7 is represented in the Figure by broken lines and includes a path 8 between the MGW 2 and MSC 3 that is in accordance with H.248, and a path 9 between the BSS 1 and MSC 3 which uses BSSMAP messaging. The signaling plane 7 is used to exchange transport address information.

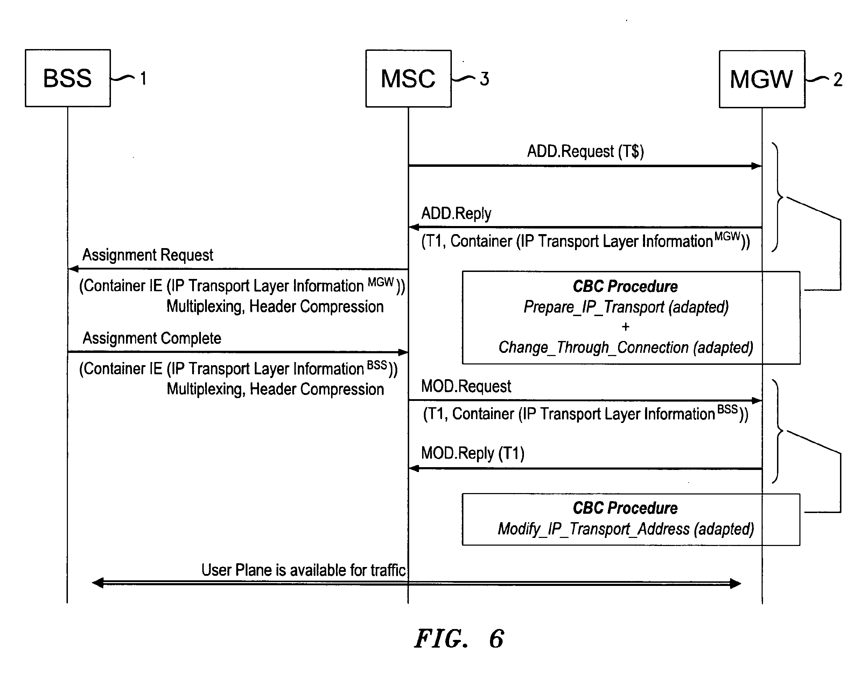

With reference to Figure 6, where AoIP is to be used, the MSC 3 signals the MGW 2 to "Prepare IP Transport" , to prepare it for transmission over the A-interface. The MGW 2 establishes a connection end point and Transport Layer information of the connection end point is passed inside a container element "AoIP Container IE" back to the MSC. The AoIP Container IE also includes data regarding the multiplexing and header compression options that the MGW 2 endpoint 6 can sustain. The MSC 3 forwards the AoIP Container IE transparently to the BSS 1 using an enhanced BSSMAP Assignment Request message over path 9. The BSS 1 uses information derived from the AoIP Container IE to select a channel for transmission of the user data and to ascertain the multiplexing and header compression option information from the MGW 2. The Transport Layer information of the local connection end point 5 at the BSS 1 and its multiplexing and header compression option information are included in an AoIP Container IE, which is sent back to MSC 3 as part of the BSSMAP Assignment Complete message. The MSC 3 transmits the received information onward to the MGW 2 over path 8 to set up the connection between the MGW 2 and BSS 1, incorporating the appropriate option or options for header compression and multiplexing.

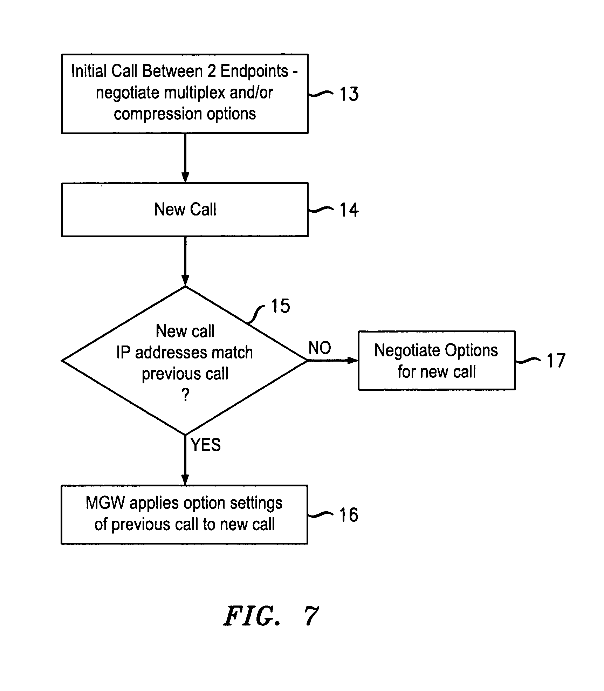

With reference to Figure 7, in another method in accordance with the invention, an initial call is set up over the A-interface between endpoints at a BSS 1 and an MGW 2, as shown at 13. This is done using the method described with reference to Figures 4 and 5, or by some other method.

A new call request is received, as shown at 14. The MGW 2 signals the MSC 3 to which it is connected with information about the IP addresses of the endpoints of the call. On receiving the information, the MSC 3 compares the endpoint IP addresses with those of previous calls, which may have be on-going or have been ended, as shown at 15. If a match is found, the MSC 3 signals the MGW 2 with the voice multiplexing and header compression option information that was used in the previous call, and the MGW 2 implements the options using this previously derived information from the earlier negotiation without any need to newly negotiate with the BSS 1 regarding the new call, as shown at 16. If no match is found, then options for the new call must go through a new negotiation process, shown at 17. In another method, the decision is made by the MGW 2 instead of the MSC 3.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for establishing a voice bearer in a telecommunications system in which packetized voice traffic is carried over a user plane, and including the step of:
negotiating at least one of header compression and voice multiplexing options for a call and, in the negotiation process, using information about the options that is not sent over the user plane during transmission of voice traffic over the user plane.

2. The method as claimed in claim 1 and wherein the user plane is the A-interface between a Base Station System, BSS, and a Media GateWay, MGW.

3. The method as claimed in claim 1 or 2 and wherein the telecommunications system is in accordance with 3GPP A-interface over IP, AoIP, specifications.

4. The method as claimed in claim 1 wherein the user plane is the Nb user plane.

5. The method as claimed in any preceding claim and wherein information about the options is transmitted via a separate path than that for voice traffic over the user plane.

6. The method as claimed in claim 5 and wherein the information is transmitted between a BSS and an MGW using enhanced BSSMAP Assignment Request signaling.

7. The method as claimed in claim 5 or 6 wherein information is included in a container element that also includes transport address information.

8. The method as claimed in claim 7 wherein the container element is the AoIP Container IE.

9. The method as claimed in claim 1, 2 or 3 wherein the information is obtained by looking at data from a call or calls previously set up between the same IP addresses.

10. A telecommunications system operating in accordance with a method as claimed in any preceding claim.
